Europäisches Patentamt

European Patent Office

Office européen des brevets

(11) Publication number: **0 224 372**
**B1**

## (12) EUROPEAN PATENT SPECIFICATION

(45) Date of publication of patent specification: **09.01.91**

(51) Int. Cl.⁵: **G 01 V 1/40**

(21) Application number: **86309009.8**

(22) Date of filing: **18.11.86**

(54) **A method of acoustic well logging.**

(30) Priority: **22.11.85 US 800923**

(43) Date of publication of application:
**03.06.87 Bulletin 87/23**

(45) Publication of the grant of the patent:
**09.01.91 Bulletin 91/02**

(84) Designated Contracting States:
**DE FR GB NL**

(56) References cited:
**EP-A-0 031 989**
**US-A-3 962 674**
**US-A-4 168 483**

(73) Proprietor: **MOBIL OIL CORPORATION**
**150 East 42nd Street**
**New York New York 10017 (US)**

(72) Inventor: **Medlin, William Louis**
**7611 Chalkstone Street**
**Dallas Texas 75248 (US)**
Inventor: **Zumwalt, Gary Lee**
**2015 Ebbtide Lane**
**Dallas Texas 75224 (US)**

(74) Representative: **Colgan, Stephen James et al**
**CARPMAELS & RANSFORD 43 Bloomsbury**
**Square**
**London WC1A 2RA (GB)**

Courier Press, Leamington Spa, England.

## Description

This invention relates to a method of acoustic well logging.

It has long been known to acoustically log open wellbores to determine the velocities of compressional ("P") waves and shear ("S") waves travelling through rock formations located in the wellbore region. Logging devices have been used for this purpose which normally comprise a sound source (transmitter) and one or more receivers disposed at preselected distances from the sound source.

By timing the travel of compressional waves, shear waves, and/or tube waves between the transmitter and each receiver, it is normally possible to determine the nature of surrounding rock formations. In logging loosely consolidated formations, however, it is often difficult to distinguish between compressional, shear, tube and secondary waves which may comprise portions of a wave train arriving at a given receiver. The use of remotely spaced, multiple receivers has therefore been proposed to aid in distinguishing between arriving wave fronts and from noise in the system. Multiple receivers permit the recognition of similar wave patterns and wave fronts which are received at each successive receiver. Since travel time differences increase with increasing distance from the transmitter source, wave fronts and patterns which are closely spaced at proximate receiver locations will separate by the time of their receipt at remote receiver locations.

Various signal timing and wave front analysis methods have also been suggested for distinguishing between wave fronts received at a given receiver. Most of these methods involve timing circuits which anticipate the receipt of, and facilitate the collection of, such wave front information. For descriptions of various logging techniques for collecting and analyzing compressional wave, shear wave, tube wave, and secondary wave data, reference is directed to U.S. Patent No. 3,333,238 (Caldwell), 3,362,011 (Zemanek, Jr.), U.S. Reissue No. 24,446 (Summers), and U.S. Patent No. 4,383,308 (Caldwell).

In the design of logging tools, various types of transmitters, such as piezoelectric or magnetostrictive transmitters, have been suggested for creating acoustic logging signals. For conventional logging operations, most such transmitters have been centrally located in the borehole and have been adapted to generate sound which is radiated in a multidirectional (360°) pattern from the transmitter to adjacent wellbore surfaces. Such transmitters are well suited for creating compressional waves in surrounding rock and sand formations.

Since compressional waves travel faster than the shear, tube or secondary waves which may also be produced by a multidirectional transmitter, calculation of compressional wave velocity is accomplished by presuming that the first arriving wave front or wave pattern is that of a compressional wave. In loosely consolidated formations, subsequent arrivals of shear waves, tube waves and/or secondary waves are difficult to distinguish. In such formations, multidirectional transmitters tend to generate compressional waves of much greater amplitudes than any shear waves also produced thereby. Recognition of shear wave arrivals is thus particularly difficult.

Recently, attention has been directed to developing transmitters which are particularly suited to shear wave logging. Such transmitters generally attempt to achieve a single point force application of sound energy to the borehole wall. The theory behind point force transmitters is that they are capable of directly generating S waves. Conventional multidirectional transmitters are said to be capable only of indirectly creating shear waves. Accordingly, point force type transmitters produce shear waves of substantially higher amplitudes than heretofore possible with conventional multidirectional P wave transmitters. Accordingly, formations, such as loosely consolidated or unconsolidated sand, which do not propagate shear waves in sufficient amplitudes to permit definitive detection using conventional P wave receivers, may now be shear wave logged with these S wave logging systems. One such shear wave logging system is disclosed in Canadian Patent No. 1,152,201 (Angona and Zemanek).

The present invention provides an acoustic well logging method, which comprises:

traversing a bore hole with a well logging tool including an acoustic transmitter of the bender-type having unrestricted piezoelectric planar surfaces oriented parallel with the longitudinal axis of said tool and exposed to a coupling liquid, which method is characterised by

exciting said transmitter with a plurality of sine wave tone bursts of fixed frequency from a generator which drive said transmitter to resonate and thereby generate respective acoustic waves each having a dominant mode of vibration, wherein the fixed frequency of said tone bursts from said generator is multiplexed through a plurality of frequency ranges so as to excite said transmitter to sequentially generate acoustic waves having differing dominant acoustic modes of vibration.

Preferably, each individual tone burst from the generator is a sine wave driving current of no more than five cycles to avoid cross-talk interference between the various logging cables of the logging tool. When the fixed frequency of such sine wave tone burst is below about 1.5 kHz, the transmitter generates dominant acoustic tube waves. With the fixed frequency between about 1.0 kHz and 5 kHz and the bender-type transmitter acting as a dipole radiator, dominant acoustic shearwaves are generated. When the fixed frequency is greater than about 1.5 kHz, the transmitter generates dominant acoustic compressional waves. By multiplexing these differing fixed frequency tone bursts, sequentially generated acoustic waves have differing dominant acoustic modes; such as, dominant compressional waves, dominant shear waves, and dominant tube waves.

The invention will now be more particularly described with reference to the accompanying drawings, in which:-

FIGS. 1 and 7 are schematic illustrations of an acoustic borehole logging method according to one example of the present invention.

FIGS. 2 and 3 illustrate the configuration and action respectively, of the transmitter section of the acoustic borehole logging system of FIG. 1.

FIG. 4 is a diagrammatic illustration of the use of the transmitter section of FIG. 1 in generating compressional and tube waves.

FIGS. 5 and 6 are diagrammatic illustrations of the use of the transmitter section of FIG. 1 in generating shear waves.

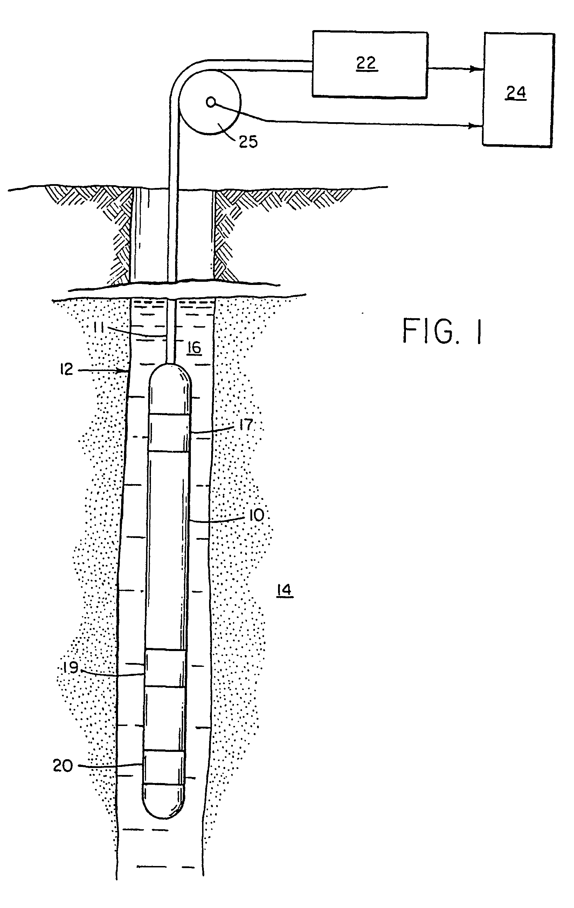

Referring now to FIG. 1, the system includes an elongated logging tool 10 which is suspended from a cable 11 within a borehole 12 which traverses a subterranean formation of interest indicated by reference character 14. Formation 14 may be a suspected oil or gas-bearing formation which is to be characterized in regard to its porosity, fluid saturation, or such other information as may be desired. The well 12 is filled with a liquid, such as drilling mud indicated by reference numeral 16. The logging tool 10 comprises an acoustic transmitter 17 and acoustic receivers 19 and 20.

Transmitter 17 and, preferably also receivers 19 and 20, take the form of bender-type transducers, as described in greater detail hereinafter.

Signals from the logging tool 10 are transmitted uphole by the conductors in cable 11 to any suitable utilization system at the surface. For example, the utilization system is illustrated as comprising an uphole analysis and control circuit 22 and recorder 24 in order that the output from circuit 22 may be correlated with depth.

The transmitter 17 and receivers 19, 20 are controlled through suitable timing circuitry located either uphole, or in the logging tool itself. Typically, the control circuitry will comprise a time base generator which operates to produce pulses to excite transmitter 17 and which gates receivers 19 and 20. Receivers 19 and 20 may be gated alternately in order to prevent cross-feed within the cable 11, as will be readily recognized by those skilled in the art. For example, receiver 19 may be gated on during an interval of from 0.5 to 30 milliseconds subsequent to a first acoustic pulse from transmitter 17. Receiver 19 is then gated off, and after the next succeeding pulse from transmitter 17, receiver 20 gated on. For example, receiver 20 may be gated on during a similar interval from 0.5 to 30 milliseconds subsequent to the transmitter output pulse. The logging tool may be moved through the well at any suitable rate while it is operated to generate and receive the acoustic pulses. Typically, the tool will be lowered to the bottom of the interval to be logged and then pulled upwardly during the logging measurements at a speed of at least 6.1m (20 feet) per minute. Somewhat greater logging speeds, e.g., 18.3m (60 feet) per minute, normally can be used.

At the surface, the uphole circuitry operates on the signals from receivers 19 and 20 to produce signals representative of the travel time between receivers 19 and 20 and the difference in amplitude between the acoustic signals detected by receivers 19 and 20. The circuitry employed for determining the time interval between the acoustic signal arrival at receivers 19 and 20 may be of any suitable type. For example, the pulses employed to trigger the transmitter may also be applied to a ramp function generator to initiate a signal which increases monotonically with time. For example, the ramp function generator may respond to a triggering pulse to generate a voltage which increases linearly with time. Thus, the amplitude of the voltage is directly proportional to the time following generation of the acoustic signal by transmitter 17. The output from the ramp function generator is applied through gates controlled by the outputs from receivers 19 and 20 to respective voltage storage means. Thus, when an acoustic signal is received at receiver 19, the resulting transducer voltage is applied to open one gate to pass the voltage from the ramp function generator to a first storage means. When the next signal is received by receiver 20, the transducer signal is applied to open another gate to pass the output from the ramp function generator to a second storage means. The two voltage signals are then applied to a difference circuit, the output of which is recorded in correlation with depth to provide a travel time log. The amplitude parameter may similarly be determined through the use of any suitable circuitry. For example, the peak voltage outputs from receivers 19 and 20 may be applied to a difference circuit which produces a voltage which is representative of the difference in the maximum amplitudes of the acoustic signals received by receivers 19 and 20. The output from this difference circuit is then recorded to provide a log of attenuation within the formation. Such analysis and control circuitry is well known to those skilled in the art, and for a further description thereof, reference is directed to U.S. Patent No. 3,191,145, also, while two receivers are shown, it will also be recognized that the logging tool may be equipped with only one receiver in which case a measured parameter may be the travel time between transmitter 17 and the receiver. Preferably, however, two receivers, as shown, will be employed in order to avoid distortion of the measured values due to borehole effects, such as changes in the borehole diameter. Typically, the first receiver 19 is spaced 1.5 to 4.6m (5 to 15 feet) from the transmitter with a spacing between adjacent receivers 19 to 20 of 0.6 to 1.5m (2 to 5 feet).

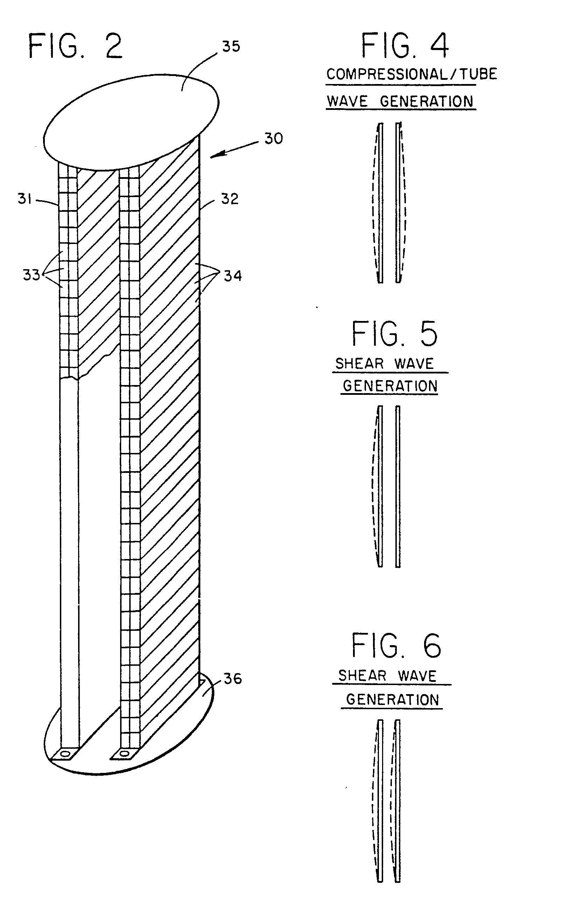

As noted previously, acoustic pulses are produced in accordance with the present invention by means of a bender-type transmitter. Bender-type transducers are, in themselves, well known and take the form described by Sheridan, C. A., et al., in "Bender Bar Transducers For Low-Frequency Underwater Sound Sources", presented at the 97th Meeting of the Acoustical Society of America, Cambridge, Massachusetts, June 15, 1979. Such a transducer is available commercially from Honeywell Defense Electronics Division, Seattle, Washington, August 20, 1979, as models HT-29-L and HX-8B. Turning now to FIG. 2, there is illustrated an enlarged view of a bender-type transducer utilized as the transmitter 17 of FIG. 1. Such a transducer 30 comprises a pair of piezoelectric bender bars 31 and 32 having unrestricted planar surfaces oriented parallel with the longitudinal axis of the transducer and exposed to a coupling liquid filling the transducer. Each bar 31, 32 is comprised of a mosaic configuration of a plurality of individual bars 33, 34 respectively. The two bars 31 and 32 are mounted between common support members 35 and 36. This type of construction permits the bars to be driven at a plurality of frequencies to give a good quality sine wave output as compared to the larger plate-type bender transducers.

The bender-principles of the bender-type transducer are shown in detail in FIG. 3. The bending action of bars 31 and 32 arises from the direction of polarization of each individual bar 33 and 34 with respect to adjacent bars 33 and 34 as indicated by the arrows. In a first mode, as shown diagrammatically in FIG. 4, the two piezoelectric elements flex outward and inward together to produce a compressional and/or tube wave in the wellbore. In the other mode, only one piezoelectric element is flexed, as shown in FIG. 5, or in the alternative, both piezoelectric elements are flexed in the same direction, as shown in FIG. 6, to produce a shear wave in the borehole. Such a bender-type transmitter is designed to have a number of characteristic resonant frequencies between a few hundred Hz and several kHz, such as from 100 Hz to 50 kHz. In response to the application of a single polarized electric field, the transmitter will resonate at a single one of such characteristic resonant frequencies.

It is a specific feature of the present invention to provide a method for driving such a bender-type transmitter so that a multipurpose acoustic log of variable frequency can be produced during a single traverse of the logging tool through the borehole instead of having to make a separate logging traverse for each desired acoustic frequency. In carrying out such a method, the bender-type transmitter is driven by a sine wave tone burst rather than the conventional single impulse. This tone burst is a sine wave driving current of fixed frequency with a duration of one or more cycles. This tone burst is repeated at an appropriate repetition rate as the logging tool traverses the borehole. Commercial devices are available for generating tone bursts, such as a Model 7060 Generator, supplied by Exact Electronics, Hillsboro, Oregon, with a Model MC 2500 Power Amplifier, supplied by McIntosh Laboratory, Binghamton, New York. Amplitudes are in the range of 100—150 volts RMS. This voltage is sufficient for generating acoustic source levels from the transmitter which will provide detectable acoustic signals in conventional long-spaced, bender-type receivers in borehole logging tools.

Too long a tone burst will create cross-talk problems between the various logging cables leading to the transmitter and receivers. To avoid such an interference during logging operations, cross-talk must cease before the earliest signal arrives at the nearest receiver. The duration of the tone burst per cycle increases with decreasing frequency. However, the amplitude of the cross-talk signal falls off significantly as frequency decreases. Under borehole operating conditions, the fastest acoustic wave energy from the transmitter begins arriving at receivers in as little as three milliseconds following initiation of transmitter source vibrations. Therefore, to avoid cross-talk interference at frequencies above 1 kHz, the tone burst duration should not exceed five cycles and, preferably, should be in the order of three cycles. To be effective under these conditions, the transmitter should have a Q no greater than ten.

It is yet a further aspect of the invention to control the frequency of the tone burst or driving frequency to the transmitter. It has been found that the vibrational mode generated in the borehole is controlled by the transmitter frequency. The dominant mode of vibration observed in one acoustic logging operation employing a Honeywell HX8-B bender-type transducer, energized as shown in FIG. 4, and with a single receiver spaced 4.6 m (15 feet) from the transmitter was a tube wave below about 1.5 kHz, a compressional wave above about 1.5 kHz, and both a tube wave and a compressional wave above about 10 kHz. The generation of tube waves at frequencies above 10 kHz is due to the presence of low frequency components in the transmitter response which excite the tube waves.

This is more fully illustrated in the following Table:

TABLE

| Transmitter Freq. (kHz) | Compressional Wave Freq. (kHz) | Tube Wave Freq. (kHz) |
|---|---|---|
| 0.4 | — | 0.4 |
| 0.5 | — | 0.5 |
| 1.0 | — | 1.0 |
| 1.5 | — | 1.2 |
| 3.6 | 3.3 | — |
| 5.9 | 3.3 | — |
| 8.5 | 3.5 | — |
| 10.0 | 3.4 | 1.1 |
| 12.5 | 3.7 | 1.0 |
| 15.5 | 3.6 | — |
| 30.0 | 3.5 | — |

It can be seen from the TABLE that the tube wave frequency is about equal to the driving frequency of the transmitter below about 1.5 kHz. The compressional wave frequency remains nearly constant at a characteristic frequency, or some harmonic, such as the 3.3 to 3.5 kHz illustrated in the example of the above TABLE, for all driving frequencies from 3.6 kHz to 30 kHz.

By energizing the transmitter as shown in FIGS. 5 or 6, a shear wave will be dominant in the range of about 1 kHz to 5 kHz.

The ability to generate a single mode of vibration (i.e, compressional, shear or tube) to the exclusion of the other two has practical advantages in acoustic well logging. It eliminates interference between the three modes and provides clean acoustic signals of large amplitude. Logs obtained from such a single mode of vibration provide better estimates of compressional, shear and tube wave velocities and amplitudes. This improves the ability of geophysicists and others to estimate permeability and porosity, to define lithology, and to detect naturally fractured intervals.

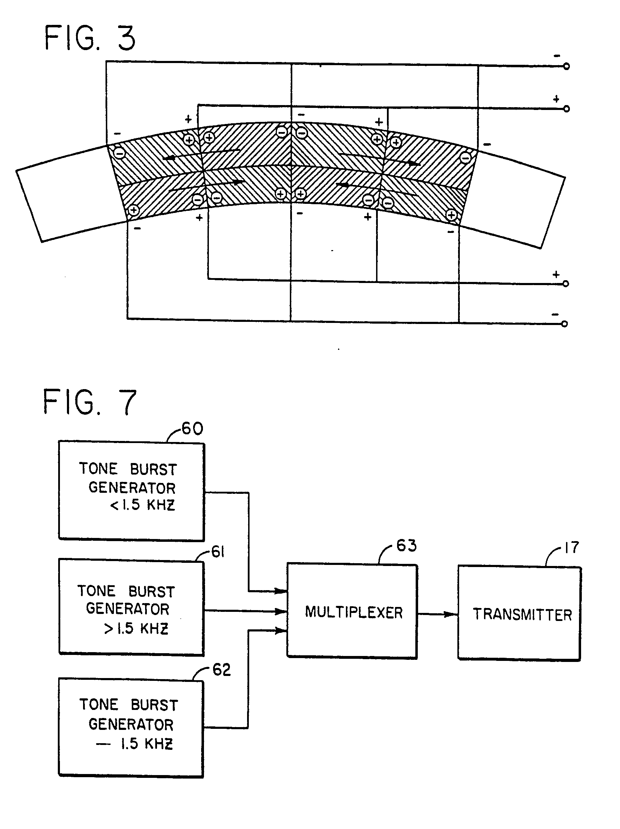

In a still further aspect of the invention, all three modes of acoustic waves can be recorded during a single logging traverse of a borehole by use of the logging system of FIG. 7 comprising the tone burst generators 60—62, the multiplexer 63, and transmitter 17. This is accomplished by multiplexing, with proper timing, tone bursts from each of the three selected frequency ranges to sequentially drive the bender-type transmitter in each of the three modes.

**Claims**

1. An acoustic well logging method, which comprises:
traversing a borehole (12) with a well logging tool (10) including acoustic transmitter (17) of the bender-type having unrestricted piezoelectric planar surfaces oriented parallel with the longitudinal axis of said tool and exposed to a coupling liquid, which method is characterised by
exciting said transmitter with a plurality of sine wave tone bursts of fixed frequency from a generator which drive said transmitter to resonate and thereby generate respective acoustic waves each having a dominant mode of vibration, wherein the fixed frequency of said tone bursts from said generator is multiplexed through a plurality of frequency ranges so as to excite said transmitter to sequentially generate acoustic waves having differing dominant acoustic modes of vibration.

2. A method according to claim 1 wherein each individual tone burst from said generator is a sine wave driving current of no more than five cycles.

3. A method according to claim 1 or 2 wherein the fixed frequency of said tone bursts are multiplexed through at least one frequency below 1.5 kHz and at least one frequency above 1.5 kHz.

4. A method according to any of claims 1 to 3 wherein said transmitter sequentially generates acoustic waveforms having dominant compressional waves, dominant shear waves, and dominant tube waves so that a single log of all three of said compressional, shear and tube waves is recorded during a single traverse of a borehole.

# EP 0 224 372 B1

**Patentansprüche**

1. Verfahren zur akustischen Bohrlochmessung, aufweisend

Durchfahren eines Bohrloches (12) mittels eines Bohrlochmeßgerätes (10) mit einem Akustiksender (17) des Bendertyps, der freie piezo-elektrische Planflächen aufweist, die parallel zur Längsachse des Werkzeuges orientiert und einer Koppelflüssigkeit ausgesetzt sind, gekennzeichnet durch

Erregen des Senders mit einer Mehrzahl von Sinuswellen-Tonimpulsen fester Frequenz aus einem Generator, welcher den Sender in Resonanz treibt und dadurch entsprechende akustische Wellen erzeugt, die jeweils eine dominante Schwingungsmode haben, wobei die feste Frequenz der Tonimpulse von dem Generator über eine Mehrzahl von Frequenzbereichen multiplexmäßig verarbeitet wird, um den Sender zu erregen, um aufeinanderfolgend akustische Wellen mit unterschiedlichen dominanten akustischen Schwingungsmoden zu erzeugen.

2. Verfahren nach Anspruch 1, dadurch gekennzeichnet, daß jeder einzelne Tonimpuls von dem Generator eine Sinuswelle ist, die Strom über nicht mehr als fünf Perioden treibt.

3. Verfahren nach einem der Ansprüche 1 oder 2, dadurch gekennzeichnet, daß die feste Frequenz der Tonimpulse über wenigstens eine Frequenz unterhalb 1.5 kHz und wenigstens eine Frequenz oberhalb 1,5 kHz multiplexmäßig verarbeitet wird.

4. Verfahren nach einem der Ansprüche 1 bis 3, dadurch gekennzeichnet, daß der Sender aufeinanderfolgend akustische Wellenformen erzeugt, die dominate Druckwellen, dominante Scherungswellen und dominante Rohrwellen haben, so daß eine einzige Aufzeichnung von allen drei Wellenformen, der Kompressions-, der Scherungs- und der Rohrwelle, während eines einzigen Durchlaufs durch ein Bohrloch aufgenommen wird.

**Revendications**

1. Un procédé de diagraphie d'un forage ou puits, comprenant les étapes suivantes:

on fait traverser le forage (12) par un outil de diagraphie (10) comportant un émetteur acoustique (17) du type à inflexion qui comprend des surfaces piézoélectriques libres parallèles à l'axe longitudinal dudit outil et exposé au contact d'un liquide de couplage,

ce procédé étant caractérisé en ce qu'il comporte en outre les étapes suivantes:

on excite ledit émetteur par une pluralité de trains ou salves d'ondes acoustiques en forme d'onde sinusoïdale de fréquence fixée provenant d'un générateur et actionnant ledit émetteur pour le mettre en résonance et produire de ce fait des ondes acoustiques différentes qui présentent chacune un mode de vibration prédominant, ladite fréquence constante des trains d'ondes acoustiques précités étant multiplexée selon une pluralité de plages de fréquences de manière à exciter ledit émetteur pour engendrer séquentiellement des ondes acoustiques présentant des modes de vibration prédominants différents.

2. Un procédé selon la revendication 1, dans lequel chaque éclat acoustique produit par ledit générateur est un courant de commande à ondes sinusoïdales ne comportant pas plus de cinq cycles.

3. Un procédé selon la revendication 1 ou 2, dans lequel ladite fréquence fixée des trains d'ondes acoustiques précitées est multiplexée par le biais d'au moins une fréquence inférieure à 1,5 kHz et d'au moins une fréquence supérieure à 1,5 kHz.

4. Un procédé selon une quelconque des revendications 1 à 3, dans lequel ledit émetteur produit séquentiellement des ondes acoustiques où il y a prédominance des différentes ondes: les ondes longitudinales, les ondes transversales et les ondes dites "tubulaires", de sorte que l'on obtient un seul enregistrement diagraphique comprenant les trois types d'ondes précités (longitudinales, transversales et tubulaires) au cours d'une seule passe d'exploration effectuée dans le trou de sondage.

FIG. 1

# FIG. 2

# FIG. 4
## COMPRESSIONAL/TUBE
## WAVE GENERATION

# FIG. 5
## SHEAR WAVE
## GENERATION

# FIG. 6
## SHEAR WAVE
## GENERATION

# FIG. 3

# FIG. 7